# DEMANDE DE BREVET EUROPEEN

(11) **EP 0 805 563 A1**
(43) Date de publication de la demande: **05.11.1997**
(21) Numéro de dépôt: 97400938.3
(22) Date de dépôt: 25.04.1997
(51) Int. Cl.: H04B 1/40, H04B 1/38, H04M 1/72

(54) **Téléphone portatif radio**

(30) Priorité: 30.04.1996 FR 9605435
(71) Demandeur: SAGEM SA, F-75783 Paris Cédex 16 (FR)
(72) Inventeur: Zibell, Laurent, 75015 Paris (FR)
(74) Mandataire: Bloch, Gérard

(57) **Abrégé**

Téléphone comprenant une pluralité de groupes antenne (10,20) bloc de téléphonie (11, 21) associés à une pluralité de bandes de fréquences, un bloc (1) d'interface opérateur-téléphone et un sélecgeurde l'un des groupes (10-11, 20-21) comprenant un doigt tournant de butée pour empêcher le déploiement des antennes, prolongé par une jambe faisant office de commutateur électrique (7). Les antennes (10, 20) et les blocs de téléphonie (11, 21) sont agencés pour que la sélection d'un groupe entraîne la mise hors-service des autres groupes.

L'invention s'applique bien au téléphone portatif radio.

## Description

En téléphonie, notamment dans le domaine du téléphone mobile radio, on distingue deux principaux types de combiné téléphonique, le combiné de téléphone portatif, encore appelé téléphone "cellulaire", de type GSM, relié par voie hertzienne à un réseau d'abonnés par exemple du type RTC, et le combiné de téléphone sans fil domestique en liaison radio avec une base connectée par un fil au réseau d'abonnés.

Les deux types de combiné émettent et reçoivent des signaux radio sur une bande de fréquence déterminée, aux moyens d'un bloc de téléphonie relié à une antenne. Le bloc de téléphonie est par ailleurs connecté à un bloc d'interface opérateur-téléphone, comprenant un bloc de commande (un microprocesseur), des organes de saisie (un clavier et un microphone), et des organes d'accès (un haut-parleur, éventuellement un écran).

Afin de ne pas créer d'interférences gênant l'émission et la réception des signaux radio, la bande de fréquences opérationnelles du téléphone portatif et celle du téléphone sans fil domestique sont distinctes, ce qui voue de tels téléphones à une utilisation spécifique. Il existe cependant des téléphones portatifs radio, d'utilisation universelle, qui intègrent une pluralité de groupes antenne-bloc de téléphonie associés à autant de bandes de fréquences opérationnelles. Le fonctionnement de tels téléphones nécessite des moyens pour sélectionner l'une des bandes de fréquence et donc l'un des blocs de téléphonie, ainsi que des moyens pour sélectionner l'antenne correspondante. Bref, il s'agit d'une mise en oeuvre lourde.

La présente invention vise à s'affranchir de cet inconvénient. A cet effet, l'invention concerne un téléphone portatif radio comprenant une pluralité de groupes antenne-bloc de téléphonie associée à une pluralité de bandes de fréquences, un bloc d'interface opérateur-téléphone et des moyens de sélection de l'un des groupes caractérisé par le fait que les antennes et les blocs de téléphonie sont agencés pour que la sélection d'un groupe entraîne la mise hors-service des autres groupes.

Grâce à l'invention, pour ce qui concerne déjà la mise hors-service, les groupes d'antenne et de bloc de téléphonie présentent, chacun, un caractère unitaire dans lequel la sélection de l'antenne et du bloc de téléphonie d'un groupe s'effectue à l'aide d'un même sélecteur.

Avantageusement, la sélection de l'antenne et du bloc de téléphonie d'un groupe s'effectue à l'aide d'un même sélecteur.

Avantageusement encore, le sélecteur est agencé pour apparier l'antenne et le bloc de téléphonie des groupes.

Ainsi, les groupes présentent un caractère unitaire tant pour la mise hors service que pour la mise en service.

Dans une forme de réalisation intéressante de l'invention, les antennes étant déployables, la sélection d'un groupe empêche le déploiement des antennes des autres groupes.

Grâce à cela, l'émission ou la réception de signaux radio, avec l'antenne déployée du groupe sélectionné, ne risque pas d'être perturbée par des interférences.

Le sélecteur peut comporter un doigt tournant au-dessus d'une base d'antennes et prolongé par une jambe de commutation, ou un étrier monté coulissant au-dessus d'une base d'antennes et dont l'une des jambes joue le rôle de commutateur.

L'invention sera mieux comprise à l'aide de la description suivante de deux formes de réalisation du téléphone portatif radio de l'invention, en référence au dessin annexé sur lequel:
- la figure 1 représente un schéma bloc fonctionnel de la première forme de réalisation du téléphone portatif radio;
- la figure 2 représente une vue en coupe partielle du téléphone de la figure 1;
- la figure 3 représente une vue de dessus du téléphone de la figure 1;
- la figure 4 représente une vue en perspective partielle de la deuxième forme de réalisation du téléphone de l'invention; et
- la figure 5 représente une vue en coupe partielle selon la ligne V-V du téléphone de la figure 4.

La première forme de réalisation du téléphone portatif radio comprend:
- ici deux groupes antenne-bloc de téléphonie 10-11, 20-21 respectivement associés à deux bandes de fréquences opérationnelles du téléphone;
- un bloc commun 1 d'interface opérateur-téléphone comportant un clavier de saisie, un haut-parleur, un microphone et ici un écran de visualisation; et
- un sélecteur 50 de l'un des groupes 10-11, 20-21.

Les blocs de téléphonie 11,21, le haut-parleur, le microphone, l'écran de visualisation et une partie du sélecteur 50 sont montés à l'intérieur d'une coque de combiné téléphonique 5. Le clavier et l'écran sont portés par la coque 5. L'agencement des antennes 10, 20 sera explicité plus loin.

Chaque bloc de téléphonie 11, 21 intègre un bloc radio 12,22 destiné à recevoir et émettre des signaux en association avec son antenne 10, 20, et une chaîne 13, 23 de traitement des signaux reliée d'un côté au bloc radio 12,22 et d'un autre côté au bloc commun 1 d'interface opérateur-téléphone, les groupes antennes-bloc de téléphonie 10-11, 20-21 étant connectés en parallèle au bloc d'interface 1.

Les signaux, émis ou reçus par l'un des groupes 10-11, 20-21, ont une fréquence appartenant à la bande de fréquences associée à ce groupe. Les deux groupes peuvent, par exemple, être respectivement associés à la bande des fréquences opérationnelles d'un téléphone sans fil domestique et à celle des fréquences opérationnelles d'un téléphone cellulaire.

Le sélecteur 50 monobloc comprend:
- une jambe de commutation 6 située à l'intérieur de la coque de combiné 5, et dont une extrémité traverse une face 15 de la coque 5 en en faisant légèrement saillie, l'autre extrémité portant un ergot de connexion 16, et
- un doigt de butée 2 solidaire de l'extrémité saillante de la jambe 6 et perpendiculaire à celle-ci.

La face de combiné 15 est percée de deux orifices 8, 9 de passage d'antenne 10, 20, les antennes 10, 20 étant déployables entre l'intérieur et l'extérieur de la coque 5.

Deux connecteurs 14, 24 respectivement associés aux deux groupes d'antenne-bloc de téléphonie 10-11, 20-11, sont voisins de l'extrémité de la jambe 6 portant l'ergot de connexion 16. Le sélecteur 50 est monté rotatif. Le doigt 2 peut tourner face aux antennes 10, 20 rétractées formant une base d'antennes. La jambe 6 peut se connecter en rotation, par son extrémité libre à ergot 16, à l'un 14 (24) des deux connecteurs et faire office de commutateur électrique 7.

Le doigt 2 étant positionné en rotation au-dessus de l'une des antennes 20 (10) en en bloquant mécaniquement le déploiement, le déploiement de l'autre antenne 10 (20) est libéré, la jambe 6 est reliée au connecteur 14 (24) associé à l'antenne libérée, et le commutateur électrique 7 est en position de connexion 3 (4) afin d'apparier électriquement l'antenne libérée et le bloc de téléphonie correspondant.

La deuxième forme de réalisation du téléphone diffère de la première par son sélecteur 40, dans ce cas monté coulissant. Ce sélecteur 40 comprend un étrier 43 muni de deux jambes 42 parallèles, chaque jambe présentant du côté en regard de l'autre jambe un rebord de connexion 41 s'étendant sur toute la largeur de la jambe 42 et faisant office de commutateur électrique.

La coque de combiné 30 comprend à chaque extrémité d'une face extérieure 36 rectangulaire, une butée de sélecteur 31, 33.

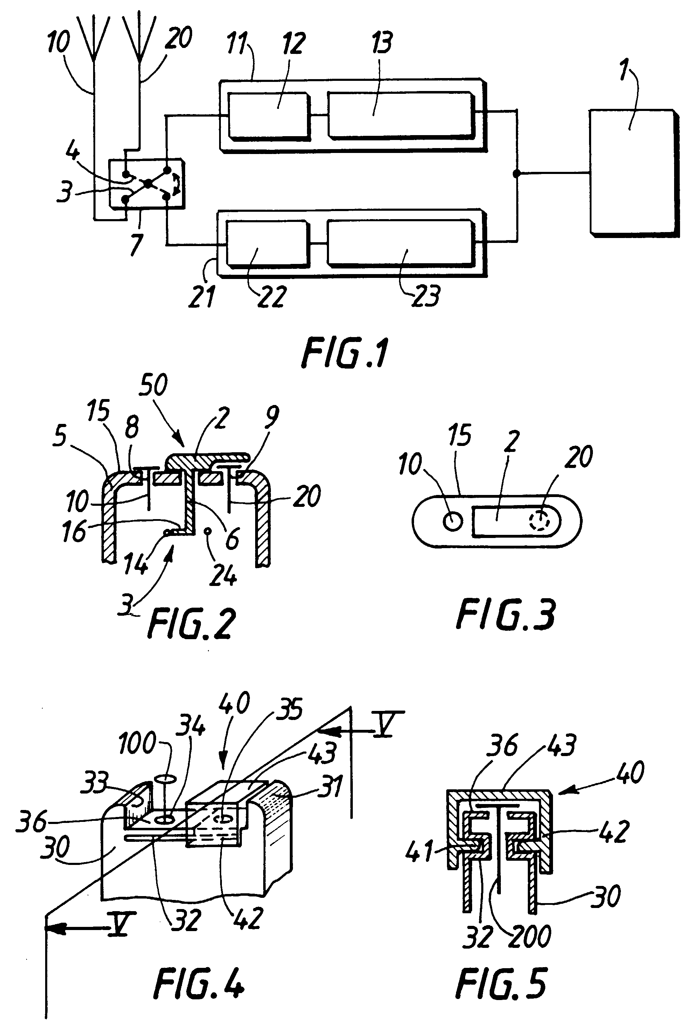

Deux glissières 32 sont ménagées à l'extérieur de la coque du combiné sur deux faces opposées, parallèlement aux arêtes longitudinales de la face 36, afin que le sélecteur 40 puisse coulisser, avec les rebrods 41, au-dessus de la face 36 de la coque de combiné 30, entre les deux butées 31, 33. Deux connecteurs électriques, non représentés sur les figures 4 et 5, associés au groupe de l'antenne 100 et à celui de l'antenne 200, sont portés ici près du fond des glissières 32, respectivement du côté de la butée 31 et du côté de la butée 33.

Deux orifices 34,35 de passage d'antenne déployable 100, 200, sont ménagés à travers la face 36.

Le sélecteur 40 peut bloquer le déploiement de l'une 200 (100) des antennes 100 (200) lorsqu'il est positionné en butée contre l'une 31 (33) des butées 31, 33, au-dessus de l'un des orifices d'antenne 35 (34). Le blocage du déploiement d'une antenne 200 (100) entraîne l'appariement de l'autre antenne 100 (200) et de son bloc de téléphonie associé, connectés ensemble par contact des rebords 41 avec le connecteur associé au groupe de l'antenne à apparier 100 (200).

On pourrait encore envisager un téléphone comprenant un commutateur 7 agencé entre les groupes antenne-bloc et le bloc d'interface 1, les antennes 10, 20; 100, 200 et les blocs de téléphonie correspondants étant définitivement appariés l'un à l'autre.

## Revendications

1. Téléphone portatif radio comprenant une pluralité de groupes antenne (10,20; 100,200)-bloc de téléphonie (11, 21) associés à une pluralité de bandes de fréquences, un bloc (1) d'interface opérateur-téléphone et des moyens (50; 40) de sélection de l'un des groupes (10-11, 20-21) caractérisé par le fait que les antennes (10, 20; 100,200) et les blocs de téléphonie (11, 21) sont agencés pour que la sélection d'un groupe entraîne la mise hors-service des autres groupes.

2. Téléphone portatif radio selon la revendication 1, dans lequel la sélection de l'antenne (10, 20; 100, 200) et du bloc de téléphonie (11, 21) d'un groupe s'effectue à l'aide d'un même sélecteur (50; 40).

3. Téléphone selon la revendication 2, dans lequel le sélecteur (50; 40) est agencé pour apparier l'antenne (10, 20; 100, 200) et le bloc téléphonie (11, 21 ) des groupes.

4. Téléphone portatif radio selon l'une des revendications 1 à 3, dans lequel les antennes (10, 20; 100, 200) étant déployables, la sélection d'un groupe (10-11, 20-21) empêche le déploiement des antennes des autres groupes.

5. Téléphone selon la revendication 4, dans lequel le sélecteur (50; 40) comprend des moyens de butée (2; 43), pour empêcher le déploiement des antennes, et des moyens de commutation électrique (7, 6; 41).

6. Téléphone portatif radio selon la revendication 5, dans lequel les moyens de butées (2; 43) et les moyens de commutation (7, 6; 41) forment un sélecteur monobloc (50; 40).

7. Téléphone portatif radio selon l'une des revendications 5 et 6, dans lequel ledit sélecteur (50) est monté rotatif.

8. Téléphone portatif radio selon la revendication 7, dans lequel le sélecteur (50) comporte un doigt (2) tournant au-dessus d'une base d'antennes (10, 20) et prolongé par une jambe de commutation (6).

9. Téléphone portatif radio selon l'une des revendications 5 et 6, dans lequel ledit sélecteur (40) est monté coulissant.

10. Téléphone portatif radio selon la revendication 8, dans lequel le sélecteur (40) comporte un étrier (43) monté coulissant au-dessus d'une base d'antennes (100, 200) et dont l'une des jambes (42) joue le rôle de commutateur.
